# EUROPÄISCHE PATENTSCHRIFT

(11) **EP 2 746 805 B1**
(45) Veröffentlichungstag und Bekanntmachung des Hinweises auf die Patenterteilung: **12.07.2017**
(21) Anmeldenummer: 12199077.4
(22) Anmeldetag: 21.12.2012
(51) Int. Cl.: G01S 15/04, G01S 15/58, G01S 15/00

(54) **Ultraschallinnenraumüberwachungsanlage für ein Kraftfahrzeug**
Ultrasonic surveillance system for the interior of a motor vehicle
Installation de surveillance d'habitacle à ultrasons pour un véhicule automobile

(43) Veröffentlichungstag der Anmeldung: 25.06.2014
(73) Patentinhaber: Delphi Technologies, Inc., Troy, Michigan 48007 (US)
(72) Erfinder: Menne, Roland, 57462 Olpe (DE); Rott, Christoph, 51109 Köln (DE); Esser, Christian, 51645 Gummersbach (DE)
(74) Vertreter: Delphi France SAS

(56) Entgegenhaltungen:
- EP-A1- 1 273 494
- EP-A1- 1 574 408
- EP-A1- 2 284 044
- WO-A1-92/02831
- DE-A1- 3 622 827
- DE-A1- 10 225 614
- DE-A1-102007 054 139
- US-A1- 2008 048 930
- US-A1- 2012 001 875
- KAUSTUBH KALGAONKAR ET AL: "One-handed gesture recognition using ultrasonic Doppler sonar", ACOUSTICS, SPEECH AND SIGNAL PROCESSING, 2009. ICASSP 2009. IEEE INTERNATIONAL CONFERENCE ON, IEEE, PISCATAWAY, NJ, USA, 19 April 2009 (2009-04-19), pages 1889-1892, XP031459623, ISBN: 978-1-4244-2353-8

## Beschreibung

Die vorliegende Erfindung betrifft eine Ultraschallinnenraumüberwachungsanlage für ein Kraftfahrzeug mit wenigstens einem Ultraschallsender und wenigstens einem Ultraschallempfänger, die im Innenraum des Kraftfahrzeugs anbringbar und zur berührungslosen Überwachung des Innenraums ausgebildet sind.

Derartige aus dem Stand der Technik bekannte Ultraschallinnenraumüberwachungsanlagen werden zur Überwachung des Innenraums eingesetzt. Wenn das Fahrzeug in Betrieb ist, sind derartige Innenraumüberwachungsanlagen normalerweise deaktiviert, um keinen unerwünschten Alarm auszulösen.

Die DE 10 2007 054 139 A1 offenbart eine Überwachungsanlage gemäß dem Oberbegriff des Anspruchs 1. Weiterer Stand der Technik ist aus EP 2 284 044 A1, EP 1 574 408 A1, US 2008/0048930 A1, EP 1 273 494 A1, DE 36 22 827 A1, WO 92/02831 A1 und DE 102 25 614 A1 bekannt.

Die US 2012/0001875 A1 beschreibt ein berührungsloses Gestenerkennungssystem, bei welchem Ultraschallsignale zum Einsatz kommen. Eine Gestenerkennung unter Verwendung eines Ultraschalldopplersonars ist außerdem aus der wissenschaftlichen Veröffentlichung von Kalgaonkar et al: "One-handed gesture recognition using ultrasonic Doppler sonar", ICASSP 2009, Seiten 1889 - 1892, 2009, XP031459623 bekannt.

Der vorliegenden Erfindung liegt die Aufgabe zugrunde, eine verbesserte Ultraschallinnenraumüberwachungsanlage für ein Kraftfahrzeug bereitzustellen, die neben der Innenraumüberwachung wenigstens eine weitere Funktion in einem Kraftfahrzeug mit hoher Zuverlässigkeit erfüllen kann und bei der auf einfache Weise eine ungewollte Auslösung der Funktion vermieden werden kann.

Die Aufgabe wird durch eine Ultraschallinnenraumüberwachungsanlage mit den Merkmalen des Anspruchs 1 gelöst. Bevorzugte Ausführungsformen und Weiterbildungen der Erfindung sind in den abhängigen Ansprüchen angegeben.

Eine erfindungsgemäße Ultraschallinnenraumüberwachungsanlage für ein Kraftfahrzeug umfasst wenigstens einen Ultraschallsender und wenigstens einen Ultraschallempfänger, die im Innenraum des Kraftfahrzeugs anbringbar und zur berührungslosen Überwachung des Innenraums ausgebildet sind, wobei die Ultraschallinnenraumüberwachungsanlage in einem Betriebsmodus betreibbar ist, der aktiv ist, wenn ein Überwachungsmodus, in dem die Überwachung des Innenraums erfolgt, inaktiv ist, wobei in dem Betriebsmodus mittels des wenigstens einen Ultraschallsenders und des wenigstens einen Ultraschallempfängers eine Bewegungsrichtung eines Objekts, insbesondere einer Hand eines Fahrzeuginsassen, ermittelbar und wenigstens ein Ausstattungselement des Fahrzeugs in Abhängigkeit von der Bewegungsrichtung betätigbar ist.

Bevorzugt kann in dem Betriebsmodus mittels des wenigstens einen Ultraschallsenders und des wenigstens einen Ultraschallempfängers ferner eine Position und/oder eine Bewegungsgeschwindigkeit des Objekts ermittelbar sein und wenigstens ein Ausstattungselement des Fahrzeugs kann in Abhängigkeit von der Position und/oder der Bewegungsgeschwindigkeit betätigbar sein.

Eine ungewollte Betätigung des Ausstattungselements lässt sich mittels der erfindungsgemäßen Ultraschallinnenraumüberwachungsanlage einfach und zuverlässig vermeiden, da neben der Position zusätzlich die Bewegungsrichtung und die Bewegungsgeschwindigkeit als weitere Kriterien für die Betätigung des Ausstattungselements herangezogen werden können.

Vorzugsweise sind der wenigstens eine Ultraschallsender und der wenigstens eine Ultraschallempfänger in einer Puls-Echo-Betriebsart und/oder einer Doppler-Betriebsart betreibbar. Beim Betrieb der Ultraschallinnenraumüberwachungsanlage in einer der beiden vorgenannten Betriebsarten lassen sich zusätzlich zur Position die Bewegungsgeschwindigkeit und die Bewegungsrichtung des Objekts auf einfache Weise bestimmen.

Nach einer bevorzugten Weiterbildung der Erfindung kann die Ultraschallinnenraumüberwachungsanlage den wenigstens einen Ultraschallsender und den wenigstens einen Ultraschallempfänger von einer Puls-Echo-Betriebsart in eine Doppler-Betriebsart umschalten, sobald sich das Objekt innerhalb eines zur Betätigung des Ausstattungselements vorgesehenen Raumbereichs befindet. In der Puls-Echo-Betriebsart ist der Energieverbrauch geringer, da Ultraschallpulse in zeitlichen Abständen ausgestrahlt werden, wohingegen in der Doppler-Betriebsart Ultraschallwellen kontinuierlich ausgestrahlt werden. Dagegen ist in der Doppler-Betriebsart eine bessere räumliche Auflösung der Position des Objekts möglich, da kontinuierlich vom Objekt reflektierte Ultraschallwellen empfangen werden können. Es ist daher vorteilhaft, die Doppler-Betriebsart einzusetzen, sobald sich das Objekt in dem Raumbereich befindet, innerhalb dem das Ausstattungselement zum Beispiel mittels der Hand betätigbar sein soll.

Bevorzugt sind der wenigstens eine Ultraschallsender und der wenigstens eine Ultraschallempfänger in einer Puls-Echo-Betriebsart, insbesondere zur Ermittlung der Bewegungsgeschwindigkeit und/oder der Bewegungsrichtung des Objekts, mit einer festen Pulswiederholrate betreibbar. Besonders bevorzugt ist die Pulswiederholrate in Abhängigkeit von der Bewegungsgeschwindigkeit des Objekts verstellbar, wodurch auch bei verhältnismäßig hohen Bewegungsgeschwindigkeiten des Objekts eine ausreichend genaue Auflösung für die Positionsbestimmung erreichbar ist.

Bevorzugt kann das Ausstattungselement nur dann betätigt werden, wenn die Position des Objekts innerhalb eines vorgegebenen Raumbereichs liegt und/oder wenn die Bewegungsgeschwindigkeit des Objekts innerhalb eines vorgegebenen Geschwindigkeitsintervalls liegt. Erfindungsgemäß kann das Ausstattungselement nur dann betätigt werden, wenn die Bewegungsrichtung des Objekts nur innerhalb eines Toleranzbereichs von einer vorgegebenen Bewegungsrichtung abweicht. Eine ungewollte Betätigung des Ausstattungselements kann somit auf einfache Weise vermieden werden.

Die Ultraschallinnenraumüberwachungsanlage kann dazu ausgebildet sein, anhand von zeitlich nacheinander ermittelten Positionen und/oder Bewegungsgeschwindigkeiten und/oder Bewegungsrichtungen des Objekts eine Geste zu ermitteln. Dabei ist es besonders vorteilhaft, wenn die Ultraschallinnenraumüberwachungsanlage das Ausstattungselement nur dann betätigt, wenn die ermittelte Geste einer dem Ausstattungselement zu dessen Betätigung zugeordneten Geste entspricht.

Durch Berücksichtigung der Bewegungsgeschwindigkeit und der Bewegungsrichtung können auch komplexere Gesten erkannt werden. Es ist somit möglich, dass viele unterschiedliche Gesten definiert und erkannt werden können, so dass eine Vielzahl von verschiedenen Ausstattungselementen im Fahrzeug selektiv durch Erkennen der einem jeweiligen Ausstattungselement zugeordneten Geste betätigt werden können.

Es können mehrere Ultraschallsender und/oder mehrere Ultraschallempfänger vorgesehen sein, die sequentiell oder parallel ansteuerbar sind, insbesondere in der Puls-Echo-Betriebsart zur Ermittlung der Position des Objekts. Mittels mehrerer Ultraschallsender und/oder mehrerer Ultraschallempfänger können die Position, Bewegungsgeschwindigkeit und Bewegungsrichtung des Objekts genauer erfasst werden.

Beispielsweise können ein Ultraschallsender und mehrere Ultraschallempfänger eingesetzt werden, um die Position des Objekts durch Triangulation zu bestimmen. Bei den meisten aus dem Stand der Technik bekannten Innenraumüberwachungsanlagen sind ohnehin mehrere Ultraschallsender-/Empfänger vorgesehen, um eine verbesserte Abdeckung im Innenraum zu erreichen. Die Verwendung dieser ohnehin vorhandenen Sender/Empfänger zur Betätigung eines Ausstattungselements verursacht daher keine oder nur geringe Zusatzkosten.

Bevorzugt umfasst das Ausstattungselement eine Innenraumbeleuchtung des Fahrzeugs, die in Abhängigkeit von der Position, Bewegungsgeschwindigkeit und/oder Bewegungsrichtung des Objekts betätigbar, insbesondere dimmbar, ist.

Nach einer bevorzugten Weiterbildung der Erfindung ist die Ultraschallinnenraumüberwachungsanlage dazu ausgebildet, eine Temperatur, insbesondere des Innenraums, bei der Ermittlung der Position, Bewegungsgeschwindigkeit und/oder Bewegungsrichtung des Objekts zu berücksichtigen. Aufgrund der Temperaturabhängigkeit der Schallgeschwindigkeit können somit die Position, Bewegungsrichtung und Bewegungsgeschwindigkeit des Objekts besonders genau ermittelt werden.

Es kann vorgesehen sein, dass ein auf einem Sitz des Fahrzeugs liegender Gegenstand detektierbar ist. Ein Kamerasystem kann somit eingespart werden.

Vorzugsweise ist nach erfolgter Detektion des Gegenstands ein Warnsignal auslösbar und/oder verkehrssicherheitsrelevante Ausstattungselemente können betätigbar sein. Der Fahrzeuginsasse kann somit auf eine mögliche Gefahr hingewiesen werden.

Bevorzugt ist ein, insbesondere in einen Dachhimmel des Fahrzeugs einbaubares, Dachmodul vorgesehen, in dem der wenigstens eine Ultraschallsender und der wenigstens eine Ultraschallempfänger untergebracht sind.

Die erfindungsgemäße Ultraschallinnenraumüberwachungsanlage eignet sich entsprechend den vorhergehenden Ausführungen nicht nur zur Innenraumüberwachung, sondern sie kann auch zur Betätigung wenigstens eines Ausstattungselements eingesetzt werden. Dabei kann insbesondere durch Gestenerkennung eine unbeabsichtigte Betätigung des Ausstattungselements vermieden werden. Ferner können separate Näherungsschalter, die aus dem Stand der Technik zur berührungslosen Betätigung von Ausstattungselementen bekannt sind, eingespart werden.

Die Erfindung wird nachfolgend beispielhaft unter Bezugnahme auf die beigefügten Zeichnungen beschrieben. Es zeigen, jeweils in schematischer Darstellung,
- Fig. 1: ein Cockpit eines Fahrzeugs mit einem im Dachhimmel angeordneten Dachmodul, in welchem eine erfindungsgemäße Ultraschallinnenraumüberwachungsanlage angeordnet ist,
- Fig. 2: das Dachmodul des Cockpits von Fig. 1,
- Fig. 3: ein vereinfachtes Blockdiagramm der erfindungsgemäßen Ultraschallinnenraumüberwachungsanlage von Fig. 1, die über eine Steuerung mit im Dachmodul untergebrachten Leuchten verbunden ist,
- Fig. 4A: ein Diagramm zur Illustration der Funktionsweise der Ultraschallinnenraumüberwachungsanlage,
- Fig. 4B: ein weiteres Diagramm zur Illustration der Funktionsweise der Ultraschallinnenraumüberwachungsanlage,
- Fig. 5 bis 7: Darstellungen zur Illustration der Funktionsweise einer weiteren erfindungsgemäßen Ultraschallinnenraumüberwachungsanlage, und
- Fig. 8: eine Darstellung zur Illustration der Funktionsweise noch einer weiteren erfindungsgemäßen Ultraschallinnenraumüberwachungsanlage.

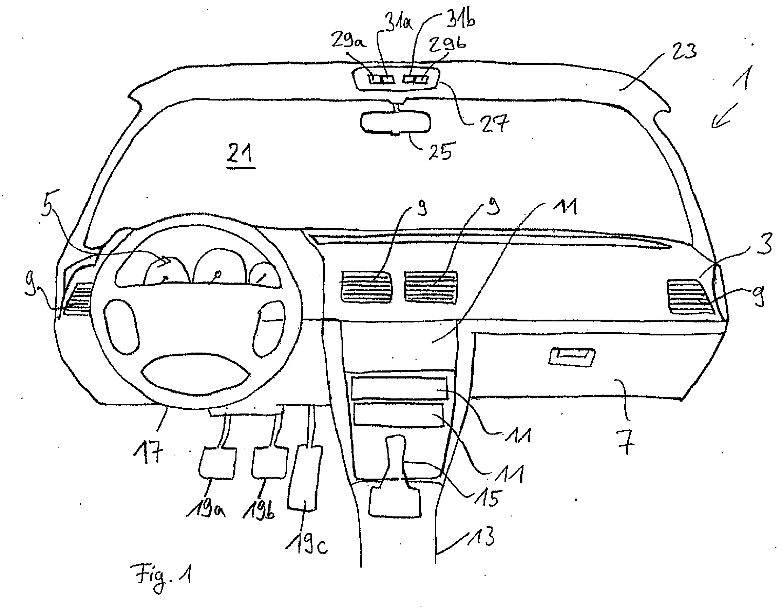

Das in Fig. 1 gezeigte Cockpit 1 umfasst ein Armaturenbrett 3 mit einer Instrumententafel 5, einem Handschuhfach 7 und Luftdüsen 9. In der Mitte des Armaturenbretts 3 sind mehrere Anzeige- und/oder Schalteinrichtungen 11 angeordnet, wie beispielsweise ein Bordcomputer, ein Radio und Schalter zum Betätigen einer Heizung und einer Belüftung. Aus einer Mittelkonsole 13 ragt ein Schalthebel 15 heraus. Unterhalb des Lenkrads 17 sind ein Kupplungspedal 19a, ein Bremspedal 19b sowie ein Gaspedal 19c vorgesehen. Oberhalb des Armaturenbretts 3 erstreckt sich eine Windschutzscheibe 21, an die sich ein Dachhimmel 23 anschließt.

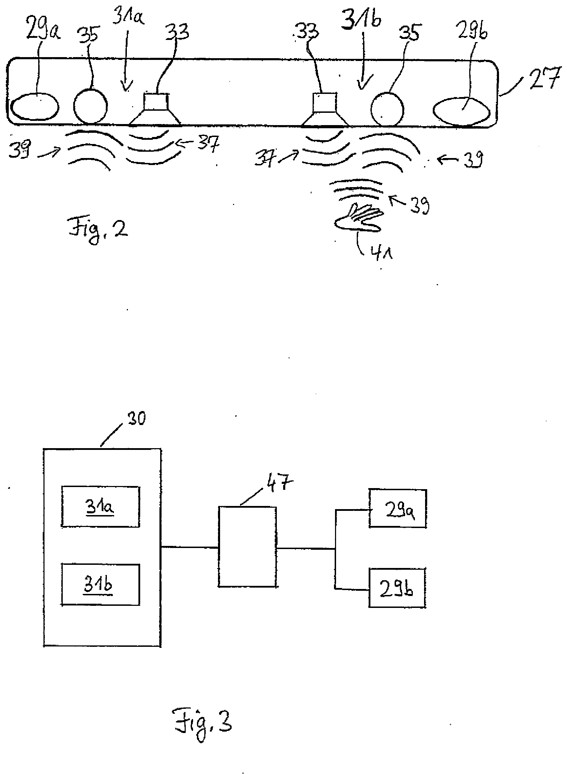

Der Dachhimmel 23 weist ein vor dem Rückspiegel 25 angeordnetes Dachmodul 27 auf, in dem eine linke Leuchte 29a und eine rechte Leuchte 29b angeordnet sind. Die linke Leuchte 29a ist zur Beleuchtung des Innenraums auf der Seite des Fahrers vorgesehen. Die rechte Leuchte 29b ist zur Beleuchtung des Innenraums auf der Beifahrerseite vorgesehen. Außerdem weist das Dachmodul 27 eine linke Sende-/Empfangseinrichtung 31a und eine rechte Sende-/Empfangseinrichtung 31b einer Ultraschallinnenraumüberwachungsanlage 30 auf. Jede Sende-/Empfangseinrichtung 31a, 31b umfasst einen Sender 33 zum Abstrahlen von Pulsen 37 von Ultraschallwellen und einen Empfänger 35 zum Empfangen der zurückreflektierten Ultraschallpulse 39 (vgl. Fig. 2).

Die Ultraschallinnenraumüberwachungsanlage 30 ist in einem Überwachungsmodus betreibbar, in dem die linke und die rechte Sende-/Empfangseinrichtung 31a, 31b in an sich bekannter Weise zur berührungslosen Überwachung des Innenraums eingesetzt werden. Außerdem ist die Ultraschallinnenraumüberwachungsanlage 30 in einem Betriebsmodus betreibbar, der bei inaktivem Überwachungsmodus aktiv ist. In dem Betriebsmodus lässt sich mittels der linken Sende-/Empfangseinrichtung 31a die linke Leuchte 29a und mittels der rechten Sende-/Empfangseinrichtung 31b die rechte Leuchte 29b betätigen. Die Ultraschallinnenraumüberwachungsanlage 30 erfüllt somit eine Doppelfunktion, da sie nicht nur zur Innenraumüberwachung sondern auch zur Betätigung der Leuchten 29a, 29b vorgesehen ist. Dabei ist die Ultraschallinnenraumüberwachungsanlage 30 über eine Steuerung 47 mit den Leuchten 29a, 29b gekoppelt (vgl. Fig. 3). Die Betätigung der Leuchten 29a, 29b erfolgt somit indirekt über die Steuerung 47, bei der es sich um eine zentrale Steuerung des Fahrzeugs handeln kann. Alternativ kann die Ultraschallinnenraumüberwachungsanlage 30 mit den Leuchten 29a, 29b direkt gekoppelt sein, so dass diese direkt von der Ultraschallinnenraumüberwachungsanlage 30 angesteuert werden können.

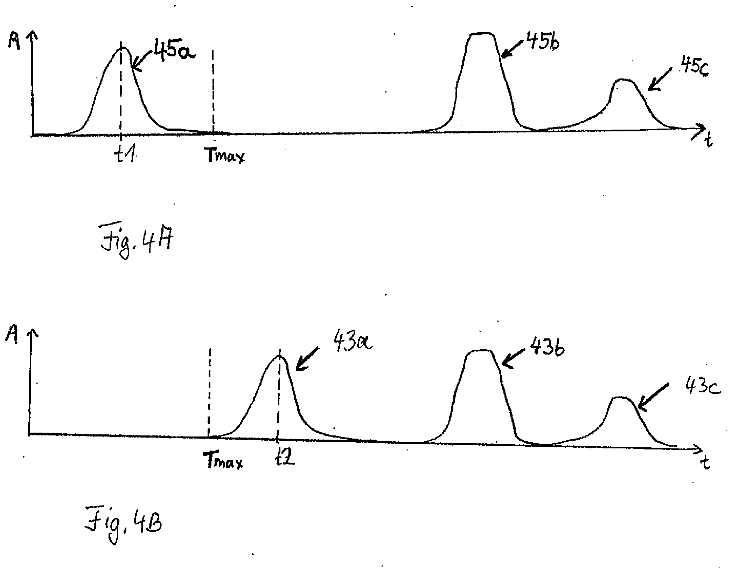

Nachfolgend wird die Funktionsweise der Ultraschallinnenraumüberwachungsanlage 30 in dem Betriebsmodus näher erläutert. Um beispielsweise die rechte Leuchte 29b zu betätigen, hält der Insasse seine Hand 41 vor die rechte Sende-/Empfangseinrichtung 31b, wie in Fig. 2 gezeigt ist. Für die rechte Sende-/Empfangseinrichtung 31b sind in dem Diagramm der Fig. 4A die Amplitude A von empfangenen Pulsen 45a, 45b und 45c als Funktion der Zeit t dargestellt. Dabei wurden die Pulse 45a, 45b und 45c jeweils zum Zeitpunkt t = 0 von der Sende-/Empfangseinrichtung 31b abgestrahlt, so dass die Zeitachse die Laufzeit der Pulse angibt. Der Puls 45a rührt von einer Reflexion von der Hand 41 her, wohingegen der Puls 45b auf einer Reflexion am Körper des Insassen und der Puls 45c auf einer Reflexion an einem anderen Reflektor, wie etwa einem Fahrzeugsitz, beruhen.

Die Ultraschallinnenraumüberwachungsanlage 30 ist dazu ausgebildet, die Laufzeit eines empfangenen Pulses mit einer Maximallaufzeit Tmax zu vergleichen und, wenn die Maximalgeschwindigkeit Tmax unterschritten wird, diejenige Leuchte 29a, 29b zu betätigen, die der Sende-/Empfangseinrichtung zugeordnet ist, welche den Puls empfangen hat. Da die Hand 41 in einem verhältnismäßig geringen Abstand vor die Sende-/Empfangseinrichtung 31b gehalten wird, ist die Laufzeit t1 des Pulses 45a entsprechend kurz. Daher ist die Laufzeit t1 des Pulses 45a kleiner als die Maximallaufzeit Tmax, so dass unter Zwischenschaltung der Steuerung 47 die rechte Leuchte 29b betätigt wird. Die Maximallaufzeit Tmax ist dabei so kurz gewählt, dass durch die Pulse 45b und 45c die rechte Leuchte 29b nicht betätigt wird.

Das Diagramm der Fig. 4B zeigt die Amplitude A von Pulsen 43a, 43b und 43c als Funktion der Zeit t, wobei die Pulse 43a, 43b und 43c von der linken Sende-/Empfangseinrichtung 31a abgestrahlt und wieder empfangen wurden. Der Puls 43a beruht auf einer Reflexion von der Hand 41, die vor die rechte Sende-/Empfangseinrichtung 31b gehalten wird (vgl. Fig. 2), wohingegen der Puls 43b von einer Reflexion am Körper des Insassen und der Puls 43c von einer Reflexion an dem Reflektor herrühren. Wie in Fig. 4B gezeigt ist, ist die Laufzeit t2 das Pulses 43a größer als die Maximallaufzeit Tmax, so dass durch den Puls 43a keine Betätigung der linken Leuchte 29a bewirkt wird. Entsprechendes gilt für die Pulse 43b und 43c.

Die Maximallaufzeit Tmax ist so gewählt, dass die jeweilige Leuchte 29a, 29b nur betätigt wird, wenn die Hand 41 in einem geringen Abstand vor die jeweilige, der Leuchte 29a, 29b zugeordneten Sende-/Empfangseinrichtung 31a, 31b gehalten wird. Somit kann eine unbeabsichtigte Betätigung der Leuchten 29a, 29b vermieden werden.

Bei einer alternativen Ausführungsform werden die detektierten Laufzeiten in Abstandswerte umgewandelt. Dabei erfolgt eine Betätigung der Leuchten 29a, 29b in gleicher Weise wie anhand der Laufzeiten, wenn ein bestimmter Maximalabstand unterschritten wird.

Es kann vorgesehen sein, dass die Helligkeit des von einer Leuchte 29a, 29b ausgestrahlten Lichts in Abhängigkeit von der Laufzeit oder in Abhängigkeit von einem ermittelten Abstandswert eingestellt wird. So wird die Helligkeit des Lichts der Leuchte 29b beispielsweise mit kürzer werdender Laufzeit t1 erhöht und mit zunehmender Laufzeit t1 erniedrigt.

Außerdem kann vorgesehen sein, dass mittels jeder Sende-/Empfangseinrichtung 31a, 31b eine Geschwindigkeit der sich bewegenden Hand 41 gemessen wird, so dass die Leuchten 29a, 29b in Abhängigkeit von der Geschwindigkeit geregelt werden können.

Die Sende-/Empfangseinrichtungen 31a, 31b lassen sich auch zur Detektion von Bewegungen einsetzen. Beispielsweise kann eine Bewegung detektiert werden, in deren Verlauf der Insasse seine Hand 41 zuerst vor die linke Sende-/Empfangseinrichtung 31a hält, dann vor die rechte Sende- / Empfangseinrichtung 31b und dann wieder vor die linke Sende-/Empfangseinrichtung 31a. Eine derartige Bewegung kann von der Innenraumüberwachungsanlage 30 mit vorgegebenen Gesten verglichen werden. Falls die detektierte Bewegung mit einer bestimmten Geste übereinstimmt, können die Leuchten 29a, 29b in einer bestimmten, der Geste zugeordneten Weise betätigt werden. Beispielsweise können die Leuchten 29a, 29b durch die vorstehend beschriebene Bewegung ausgeschaltet werden.

Die Sende-/Empfangseinrichtungen 31a, 31b lassen sich außerdem zur Detektion von Gegenständen einsetzen. Beispielsweise kann ein auf einem Fahrzeugsitz liegender Gegenstand anhand der zurückreflektierten Signale (vgl. Fig. 4A und 4B) detektiert werden, insbesondere indem ein von dem Gegenstand herrührender zusätzlicher Puls detektiert wird, der zum Beispiels zwischen den Pulsen 45b und 45c bzw. 43b und 43c liegt. Bei der Detektion eines derartigen Pulses kann ein Warnsignal ausgegeben und somit der Insasse auf den Gegenstand aufmerksam gemacht werden.

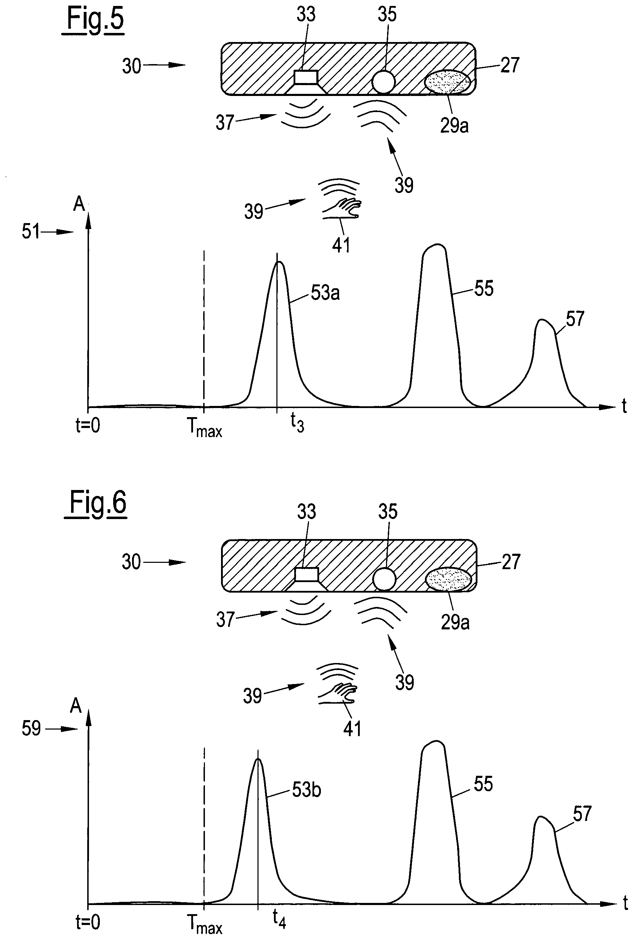

Die mit Bezug auf die Fig. 5 bis 7 beschriebene Variante einer erfindungsgemäßen Ultraschallinnenraumüberwachungsanlage 30 weist einen Ultraschallsender 33 und einen Ultraschallempfänger 35 auf und ist bei inaktivem Überwachungsmodus in einem Betriebsmodus betreibbar, in welchem eine Leuchte 29a betätigbar ist.

Der Ultraschallsender 33 und der Ultraschallempfänger 35 sind in einer Puls-Echo-Betriebsart betreibbar, in der vom Ultraschallsender 33 in einer zeitlichen Abfolge Pulse 37 ausgesendet werden, die zum Beispiel an einer Hand 41 eines Fahrzeuginsassen reflektiert und als zurückreflektierte Pulse 39 vom Ultraschallempfänger 35 empfangen werden können.

Das in der Fig. 5 abgebildete Diagramm 51 zeigt den Amplitudenverlauf A von vom Ultraschallempfänger 35 empfangenen Ultraschallpulsen über der Zeit t, die von einem zum Zeitpunkt t = 0 vom Ultraschallsender 33 ausgestrahlten Ultraschallpuls herrühren. Die Zeitachse gibt somit die Laufzeit der Pulse an. Wie das Diagramm 51 zeigt, wird ein von der Hand 41 zurückreflektierter Ultraschallpuls 53a zum Zeitpunkt t3 empfangen, während vom Körper des Insassen bzw. von einem Fahrzeugsitz zurückgeworfene Ultraschallpulse 55, 57 zu späteren Zeitpunkten empfangen werden. Die Laufzeit t3 des Ultraschallpulses 53a ist ein Maß für den Abstand der Hand 41 zum Dachmodul 27, in dem der Ultraschallsender 33 und der Ultraschallempfänger 35 untergebracht sind, so dass aus der Laufzeit t3 und der Schallgeschwindigkeit (ca. 343 m/s in Luft) der Abstand zwischen dem Dachmodul 27 und der Hand 41 ermittelt werden kann.

Bei der in Fig. 6 gezeigten Darstellung hat sich die Hand 41 dem Dachmodul 27 weiter angenähert. Die entsprechende Laufzeit t4 des von der Hand 41 zurückreflektierten Pulses 53b hat sich daher verkürzt, vgl. das Diagramm 59 in Fig. 6.

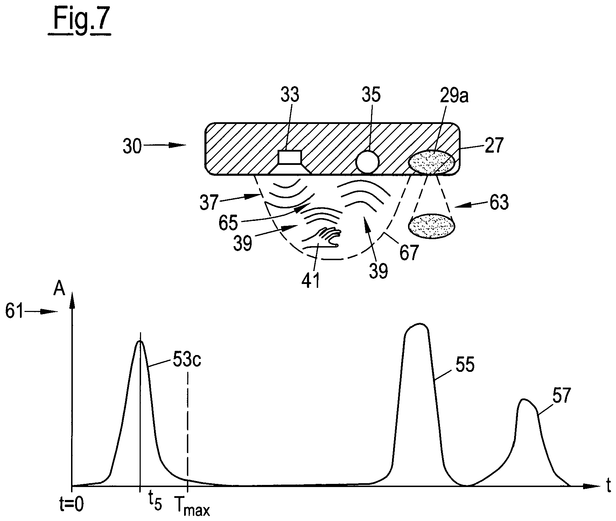

Bei der in Fig. 7 gezeigten Darstellung hat sich die Hand 41 dem Dachmodul 27 noch weiter genähert, wodurch die Laufzeit t5 des von der Hand 41 zurückreflektierten Pulses 53c noch weiter verkürzt wurde, vgl. das Diagramm 61 in Fig. 7.

Die Ultraschallinnenraumüberwachungsanlage 30 kann so ausgebildet sein, dass die Leuchte 29a eingeschaltet wird, sobald die Laufzeit eines zurückreflektierten Pulses geringer ist als eine vorgegebene Maximallaufzeit Tmax. Der Abstand der Hand 41 muss somit einen vorgegebenen Maximalabstand unterschreiten beziehungsweise die Hand 41 muss sich innerhalb eines vorgegebenen, mit der Maximallaufzeit Tmax korrelierten, unterhalb des Dachmoduls liegenden 27 Raumbereichs 65 (vgl. Fig. 7 mit der gestrichelt eingezeichneten Grenzlinie 67 des Raumbereichs 65) befinden, um die Leuchte 29a zu betätigen.

Wie im Diagramm 61 der Fig. 7 gezeigt ist, liegt die Laufzeit t5 unterhalb der Maximallaufzeit Tmax, so dass die Leuchte 29a bei der in Fig. 7 gezeigten Position der Hand 41 angeschaltet ist (vgl. den eingezeichneten Lichtkegel 63), während die Leuchte 29b bei der in Fig. 6 gezeigten Position der Hand 41 noch ausgeschaltet ist.

Bei der Ultraschallinnenraumüberwachungsanlage 30 ist die Zeitdauer T zwischen zwei aufeinanderfolgend ausgesendeten Ultraschallpulsen bekannt. Die Zeitdauer T entspricht dem Inversen der Pulswiederholrate 1/T. Ferner können zum Beispiel die zurückreflektierten Pulse 53a und 53b, die in den Diagrammen 51 und 59 gezeigt sind, von zwei aufeinanderfolgend abgegebenen Pulsen herrühren. Aus der Differenz der Laufzeiten t4 und t3 und der Schallgeschwindigkeit kann die Wegstrecke S ermittelt werden, um die sich die Hand 41 während der Zeitdauer T bewegt hat. Aus der ermittelten Wegstrecke und der inversen Pulswiederholrate kann dann die Bewegungsgeschwindigkeit V der Hand 41 berechnet werden, V = S/T.
Bei T = 50 ms und S = 1 cm ergibt sich beispielsweise V = 0,2 m/s.

Ferner kann anhand des Vorzeichens, dass sich bei der Bildung der Differenz zwischen den Laufzeiten t4 und t3 ergibt, bestimmt werden, ob sich die Hand 41 auf das Dachmodul 27 zu oder davon wegbewegt. Die Bewegungsrichtung der Hand 41 kann somit ermittelt werden.

Außerdem kann die Pulswiederholrate zum Beispiel in Abhängigkeit der ermittelten Bewegungsgeschwindigkeit geändert werden. Dadurch wird insbesondere bei höheren Bewegungsgeschwindigkeiten eine höhere räumliche Auflösung erreicht.

Die Ultraschallinnenraumüberwachungsanlage 30 kann somit nicht nur die Position der Hand 41 unterhalb des Dachmoduls 27 bestimmen, sondern auch die Bewegungsgeschwindigkeit und die Bewegungsrichtung der Hand 41. Dadurch wird es möglich, dass die Leuchte 29a nicht nur in Abhängigkeit der Signallaufzeit bzw. des ermittelten Abstands betätigt werden kann, sondern auch in Abhängigkeit der Bewegungsgeschwindigkeit und der Bewegungsrichtung der Hand 41. Beispielsweise kann zusätzlich zu dem vorstehend erwähnten Kriterium zum Einschalten der Leuchte 29a, wonach der Abstand der Hand 41 zum Dachmodul 27 einen vorgegebenen Maximalabstand unterschreiten muss, noch vorausgesetzt werden, dass die Bewegungsgeschwindigkeit der Hand 41 größer ist als eine vorgegebene Minimalgeschwindigkeit und dass die Bewegungsrichtung der Hand 41 in Richtung des Dachmoduls 27 gerichtet ist.

Bei der mit Bezug auf die Fig. 5 bis 7 beschriebenen Variante bilden der Sender 33 und der Empfänger 35 einen Schallkreis, da die vom Sender 33 abgestrahlten Ultraschallpulse vom Empfänger 35 detektiert werden. Dagegen weist die mit Bezug auf die Fig. 2, 4A und 4B beschriebene Variante einer erfindungsgemäßen Ultraschallinnenraumüberwachungsanlage 30 zwei Schallkreise auf, wobei jeweils ein Schallkreis von jeweils einer der beiden Sende-/Empfangseinrichtungen 31a, 31b gebildet wird. Anhand der beiden Schallkreise kann die Bewegungsrichtung der Hand 41 genauer ermittelt werden als dies mit nur einem Schallkreis möglich ist. Beispielsweise kann anhand der beiden Schallkreise ermittelt werden, ob die in Fig. 2 gezeigte Hand 41 von unten her oder von der Seite auf das Dachmodul 27 zubewegt wird. Die Leuchte 29b kann dann nur bei einer Handbewegung von unten her betätigt werden. Eine detektierte Annäherung von der Seite, die zum Beispiel von einer Bewegung eines Kopfes des Insassen zum Innenspiegel 25 hin herrührt, führt somit nicht zu einer unbeabsichtigten Betätigung der Leuchte 29b.

Mehrere Ultraschallkreise können verwendet werden, um die Position zum Beispiel einer Hand eines Fahrzeuginsassen noch genauer zum Beispiel durch Triangulation zu bestimmen. Aufgrund einer genaueren Positionsbestimmung können die Bewegungsrichtung und Bewegungsgeschwindigkeit der Hand ebenfalls noch genauer ermittelt werden. Damit kann eine Fehlbetätigung eines Ausstattungselements leicht vermieden werden. Au-βerdem kann eine von der Hand eines Insassen ausgeführte Geste besonders einfach und genau detektiert werden, indem eine zeitliche Abfolge von ermittelten Positionen, Bewegungsgeschwindigkeiten und Bewegungsrichtungen der Hand mittels mehrerer Ultraschallkreise erfasst wird. Es ist ferner möglich, dass ein Ausstattungselement nur dann betätigt werden kann, wenn die ausgeführte Geste einer dem jeweiligen Ausstattungselement zugeordneten Geste entspricht.

Die Ultraschallkreise können alternierend oder parallel angesteuert werden. Mehrere Ultraschallkreise können beispielsweise mittels eines Ultraschallsenders und mehrerer Ultraschallempfänger realisiert werden. Mehrere Ultraschallkreise lassen sich auch durch mehrere Sender-Empfänger-Paare realisieren.

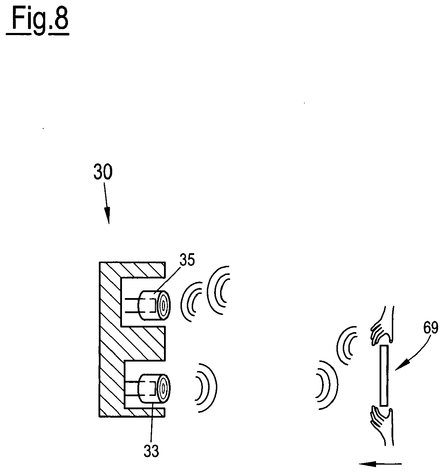

Bei der in Fig. 8 gezeigten Variante einer Ultraschallinnenraumüberwachungsanlage 30 arbeiten der Ultraschallsender 33 und der Ultraschallempfänger 35 in einer Doppler-Betriebsart, bei welcher der Sender 33 ein kontinuierliches Ultraschallsignal mit einer Grundfrequenz aussendet. Das am Empfänger 35 ankommende Signal enthält ein Dopplersignal, dessen Frequenz gegenüber der Grundfrequenz in Abhängigkeit von der Bewegungsgeschwindigkeit und Bewegungsrichtung eines Objekts 69 verschoben ist, an dem das Signal reflektiert wurde. Anhand der Frequenz des Dopplersignals können in an sich bekannter Weise die Bewegungsgeschwindigkeit und Bewegungsrichtung des Objekts 69, bei dem es sich nur um die Hand eines Insassen handeln kann, ermittelt werden. Analog wie vorstehend beschrieben kann die räumliche Auflösung auch bei einer Dopplermessung durch die Verwendung von mehreren Schallkreisen erhöht werden, wodurch insbesondere die Bewegungsrichtung des Objekts 69 genauer ermittelt werden kann.

Der Sender 33 und der Empfänger 35 einer erfindungsgemäßen Ultraschallinnenraumüberwachungsanlage können sowohl in der Puls-Echo-Betriebsart als auch in der Doppler-Betriebsart betreibbar sein. Dabei ist es bevorzugt, dass der Sender 33 und der Empfänger 35 solange in der Puls-Echo-Betriebsart betrieben werden, bis sich ein Objekt (vgl. die Hand 41 in Fig. 7) innerhalb eines in der Umgebung des Senders 33 bzw. des Empfänger 35 definierten Raumbereichs (vgl. den Raumbereich 65 in Fig. 7) befindet. Erst dann werden der Sender 33 und der Empfänger 35 in die Doppler-Betriebsart umgeschaltet, in der eine bessere räumliche Auflösung erreicht werden kann.

### Bezugszeichenliste

- 1: Cockpit
- 3: Armaturenbrett
- 5: Instrumententafel
- 7: Handschuhfach
- 9: Luftdüsen
- 11: Anzeige- und/oder Schalteinrichtung
- 13: Mittelkonsole
- 15: Schalthebel
- 17: Lenkrad
- 19a: Kupplungspedal
- 19b: Bremspedal
- 19c: Gaspedal
- 21: Windschutzscheibe
- 23: Dachhimmel
- 25: Rückspiegel
- 27: Dachmodul
- 29a: Leuchte
- 29b: Leuchte
- 30: Innenraumüberwachungsanlage
- 31a: Sende-/Empfangseinrichtung
- 31b: Sende-/Empfangseinrichtung
- 33: Ultraschallsender
- 35: Ultraschallempfänger
- 37: Pulse
- 39: zurückreflektierte Pulse
- 41: Hand eines Fahrzeuginsassen
- 43a, 43b, 43c: Puls
- 45a, 45b, 45c: Puls
- 47: Steuerung
- 51: Diagramm
- 53a, 53b, 53c: Ultraschallpuls
- 55: Ultraschallpuls
- 57: Ultraschallpuls
- 59: Diagramm
- 61: Diagramm
- 63: Lichtkegel
- 65: Raumbereich
- 67: Raumbereichsgrenzlinie
- 69: Objekt
- t1: Laufzeit
- t2: Laufzeit
- t3: Laufzeit
- t4: Laufzeit
- t5: Laufzeit
- Tmax: Maximallaufzeit

## Patentansprüche

1. Ultraschallinnenraumüberwachungsanlage für ein Kraftfahrzeug mit wenigstens einem Ultraschallsender (33) und wenigstens einem Ultraschallempfänger (35), die im Innenraum des Kraftfahrzeugs anbringbar und zur berührungslosen Überwachung des Innenraums ausgebildet sind, wobei die Ultraschallinnenraumüberwachungsanlage (30) in einem Betriebsmodus betreibbar ist, der aktiv ist, wenn ein Überwachungsmodus, in dem die Überwachung des Innenraums erfolgt, inaktiv ist,
**dadurch gekennzeichnet, dass**
in dem Betriebsmodus mittels des wenigstens einen Ultraschallsenders (33) und des wenigstens einen Ultraschallempfängers (35) eine Bewegungsrichtung eines Objekts (41), insbesondere einer Hand eines Fahrzeuginsassen, ermittelbar ist, dass wenigstens ein Ausstattungselement (29a, 29b) des Fahrzeugs in Abhängigkeit von der Bewegungsrichtung betätigbar ist, und
dass das Ausstattungselement (29a, 29b) nur betätigt wird, wenn die Bewegungsrichtung nur innerhalb eines Toleranzbereichs von einer vorgegebenen Bewegungsrichtung abweicht.

2. Ultraschallinnenraumüberwachungsanlage nach Anspruch 1,
**dadurch gekennzeichnet, dass**
in dem Betriebsmodus mittels des wenigstens einen Ultraschallsenders (33) und des wenigstens einen Ultraschallempfängers (35) ferner eine Position und/oder eine Bewegungsgeschwindigkeit des Objekts (41) ermittelbar ist und das Ausstattungselement (29a, 29b) ferner in Abhängigkeit von der Position und/oder der Bewegungsgeschwindigkeit betätigbar ist.

3. Ultraschallinnenraumüberwachungsanlage nach Anspruch 1 oder 2,
**dadurch gekennzeichnet, dass**
der wenigstens eine Ultraschallsender (33) und der wenigstens eine Ultraschallempfänger (35) in einer Puls-Echo-Betriebsart und/oder einer Doppler-Betriebsart betreibbar sind.

4. Ultraschallinnenraumüberwachungsanlage nach Anspruch 1, 2 oder 3,
**dadurch gekennzeichnet, dass**
diese den wenigstens einen Ultraschallsender (33) und den wenigstens einen Ultraschallempfänger (35) von einer Puls-Echo-Betriebsart in eine Doppler-Betriebsart umschaltet, sobald sich das Objekt (41) innerhalb eines zur Betätigung des Ausstattungselements (29a, 29b) vorgesehenen Raumbereichs (65) befindet.

5. Ultraschallinnenraumüberwachungsanlage nach einem der vorhergehenden Ansprüche,
**dadurch gekennzeichnet, dass**
der wenigstens eine Ultraschallsender (33) und der wenigstens eine Ultraschallempfänger (35) in einer Puls-Echo-Betriebsart, insbesondere zur Ermittlung der Bewegungsgeschwindigkeit und/oder der Bewegungsrichtung des Objekts (41), mit einer festen Pulswiederholrate betreibbar sind.

6. Ultraschallinnenraumüberwachungsanlage nach einem der Ansprüche 1 bis 4,
**dadurch gekennzeichnet, dass**
der wenigstens eine Ultraschallsender (33) und der wenigstens eine Ultraschallempfänger (35) in einer Puls-Echo-Betriebsart, insbesondere zur Ermittlung der Bewegungsgeschwindigkeit und/oder der Bewegungsrichtung des Objekts (41), mit einer Pulswiederholrate betreibbar sind, wobei die Pulswiederholrate in Abhängigkeit von der Bewegungsgeschwindigkeit des Objekts (41) verstellbar ist.

7. Ultraschallinnenraumüberwachungsanlage nach einem der vorhergehenden Ansprüche,
**dadurch gekennzeichnet, dass**
das Ausstattungselement (29a, 29b) nur betätigt wird, wenn die Position des Objekts (41) innerhalb eines vorgegebenen Raumbereichs (65) liegt und/oder wenn die Bewegungsgeschwindigkeit des Objekts (41) innerhalb eines vorgegebenen Geschwindigkeitsintervalls liegt.

8. Ultraschallinnenraumüberwachungsanlage nach einem der vorhergehenden Ansprüche,
**dadurch gekennzeichnet, dass** diese dazu ausgebildet ist, anhand von zeitlich nacheinander ermittelten Positionen und/oder Bewegungsgeschwindigkeiten und/oder Bewegungsrichtungen des Objekts (41) eine Geste zu ermitteln.

9. Ultraschallinnenraumüberwachungsanlage nach Anspruch 8,
**dadurch gekennzeichnet, dass** diese dazu ausgebildet ist, das Ausstattungselement (29a, 29b) nur dann zu betätigen, wenn die ermittelte Geste einer dem Ausstattungselement (29a, 29b) zu dessen Betätigung zugeordneten Geste entspricht.

10. Ultraschallinnenraumüberwachungsanlage nach einem der vorhergehenden Ansprüche,
**dadurch gekennzeichnet, dass** mehrere Ultraschallsender (33) und/oder mehrere Ultraschallempfänger (35) vorgesehen sind, die sequentiell oder parallel ansteuerbar sind, insbesondere in der Puls-Echo-Betriebsart zur Ermittlung der Position des Objekts (41).

11. Ultraschallinnenraumüberwachungsanlage nach einem der vorhergehenden Ansprüche,
**dadurch gekennzeichnet, dass**
das Ausstattungselement (29a, 29b) eine Innenraumbeleuchtung des Fahrzeugs umfasst, die in Abhängigkeit von der Position, Bewegungsgeschwindigkeit und/oder Bewegungsrichtung des Objekts (41) betätigbar, insbesondere dimmbar, ist.

12. Ultraschallinnenraumüberwachungsanlage nach einem der vorhergehenden Ansprüche,
**dadurch gekennzeichnet, dass**
diese die Temperatur, insbesondere des Innenraums, bei der Ermittlung der Position, Bewegungsgeschwindigkeit und/oder Bewegungsrichtung des Objekts (41) berücksichtigt.

13. Ultraschallinnenraumüberwachungsanlage nach einem der vorhergehenden Ansprüche,
**dadurch gekennzeichnet, dass**
ein auf einem Sitz des Fahrzeugs liegender Gegenstand detektierbar ist.

14. Ultraschallinnenraumüberwachungsanlage nach Anspruch 13,
**dadurch gekennzeichnet, dass** nach erfolgter Detektion des Gegenstands ein Warnsignal auslösbar ist und/oder verkehrssicherheitsrelevante Ausstattungselemente betätigbar sind.

15. Ultraschallinnenraumüberwachungsanlage nach einem der vorhergehenden Ansprüche,
**dadurch gekennzeichnet, dass**
ein, insbesondere in einen Dachhimmel (25) des Fahrzeugs einbaubares, Dachmodul (27) vorgesehen ist, in dem der wenigstens eine Ultraschallsender (33) und der wenigstens eine Ultraschallempfänger (35) untergebracht sind.

## Claims

1. Ultrasonic surveillance system for the interior of a motor vehicle, comprising at least one ultrasonic transmitter (33) and at least one ultrasonic receiver (35), which can be installed in the interior of the motor vehicle and are configured for contactless surveillance of the interior, the ultrasonic interior surveillance system (30) being operable in an operating mode which is active if a surveillance mode, in which the surveillance of the interior is carried out, is inactive,
**characterized in that**
in the operating mode, a direction of movement of an object (41), in particular a hand of a vehicle occupant, can be determined using the at least one ultrasonic transmitter (33) and the at least one ultrasonic receiver (35), at least one equipment element (29a, 29b) of the vehicle can be actuated dependent on the movement direction, and
the equipment element (29a, 29b) is only actuated if the movement direction deviates from a predetermined movement direction only within a tolerance value.

2. Ultrasonic interior surveillance system as claimed in claim 1,
**characterized in that**
in the operating mode, further a position and/or a movement speed of the object (41) can be determined using the at least one ultrasonic transmitter (33) and the at least one ultrasonic receiver (35), and further the equipment element (29a, 29b) can be actuated dependent on the position and/or the movement speed.

3. Ultrasonic interior surveillance system as claimed in claim 1 or 2,
**characterized in that**
the at least one ultrasonic transmitter (33) and the at least one ultrasonic receiver (35) are operable in a pulse echo operating mode and/or a Doppler operating mode.

4. Ultrasonic interior surveillance system as claimed in claim 1, 2 or 3,
**characterized in that**
the at least one ultrasonic transmitter (33) and the at least one ultrasonic receiver (35) are switched from a pulse echo operating mode to a Doppler operating mode as soon as the object (41) is located within an area (65) provided for actuation of the equipment element (29a, 29b).

5. Ultrasonic interior surveillance system as claimed in any of the preceding claims,
**characterized in that**
the at least one ultrasonic transmitter (33) and the at least one ultrasonic receiver (35) are operable in a pulse echo operating mode with a fixed pulse repetition rate, in particular for determining the movement speed and/or the movement direction of the object (41).

6. Ultrasonic interior surveillance system as claimed in any of claims 1 to 4,
**characterized in that**
the at least one ultrasonic transmitter (33) and the at least one ultrasonic receiver (35) are operable in a pulse echo operating mode with a pulse repetition rate, in particular for determining the movement speed and/or the movement direction of the object (41), wherein the pulse repetition rate is adjustable dependent on the speed of movement of the object (41).

7. Ultrasonic interior surveillance system as claimed in any of the preceding claims,
**characterized in that**
the equipment element (29a, 29b) is actuated only when the position of the object (41) is within a predetermined area (65) and/or when the movement speed of the object (41) is within a predetermined speed interval.

8. Ultrasonic interior surveillance system as claimed in any of the preceding claims,
**characterized in that**
the system is configured to determine a gesture based on positions determined in chronological succession and/or movement speeds and/or movement directions of the object (41).

9. Ultrasonic interior surveillance system as claimed in claim 8,
**characterized in that**
the system is configured to actuate the equipment element (29a, 29b) only if the determined gesture corresponds to a gesture assigned to the equipment element (29a, 29b) for its actuation.

10. Ultrasonic interior surveillance system as claimed in any of the preceding claims,
**characterized in that**
a plurality of ultrasonic transmitters (33) and/or a plurality of ultrasonic receivers (35) are provided which can be controlled sequentially or in parallel, in particular in the pulse echo operating mode for determining the position of the object (41).

11. Ultrasonic interior surveillance system as claimed in any of the preceding claims,
**characterized in that**
the equipment element (29a, 29b) comprises an interior illumination of the vehicle which is actuatable, in particular dimmable, dependent on the position, movement speed and/or movement direction of the object (41).

12. Ultrasonic interior surveillance system as claimed in any of the preceding claims,
**characterized in that**
the system accounts for the temperature, in particular of the interior, when determining the position, the movement speed and/or the movement direction of the object (41).

13. Ultrasonic interior surveillance system as claimed in any of the preceding claims,
**characterized in that**
an object lying on a seat of the vehicle can be detected.

14. Ultrasonic interior surveillance system as claimed in claim 13,
**characterized in that**
a warning signal can be triggered and/or safety-relevant equipment elements can be actuated after the object has been detected.

15. Ultrasonic interior surveillance system as claimed in any of the preceding claims,
**characterized in that**
a roof module (27) is provided, which can be installed in particular in a roof liner (25) of the vehicle, in which the at least one ultrasonic transmitter (33) and the at least one ultrasonic receiver (35) are accommodated.

## Revendications

1. Installation de surveillance à ultrasons de l'habitacle pour un véhicule automobile, comprenant au moins un émetteur d'ultrasons (33) et au moins un récepteur d'ultrasons (35), qui peuvent être montés dans l'habitacle du véhicule automobile et qui sont réalisés pour la surveillance sans contact de l'habitacle, dans laquelle l'installation de surveillance à ultrasons (30) est susceptible de fonctionner dans un mode de service qui est actif quand un mode de surveillance, dans lequel la surveillance de l'habitacle a lieu, est inactif,
**caractérisée en ce que**
dans le mode de service, au moyen dudit au moins un émetteur d'ultrasons (33) et dudit au moins un récepteur d'ultrasons (35), une direction de mouvement d'un objet (41), en particulier d'une main d'un occupant du véhicule, peut être déterminée de sorte qu'au moins un élément d'équipement (29a, 29b) du véhicule peut être actionné en fonction de la direction de mouvement, et
**en ce que** l'élément d'équipement (29a, 29b) est actionné uniquement quand la direction de mouvement se trouve uniquement à l'intérieur d'une plage de tolérances autour d'une direction de mouvement prédéterminée.

2. Installation de surveillance à ultrasons selon la revendication 1,
**caractérisée en ce que**, dans le mode de service, au moyen dudit au moins un émetteur d'ultrasons (33) et dudit au moins un récepteur d'ultrasons (35) il est en outre possible de déterminer une position et/ou une vitesse de déplacement de l'objet (41), et l'élément d'équipement (29a, 29b) peut en outre être actionné en fonction de la position et/ou de la vitesse de déplacement.

3. Installation de surveillance à ultrasons selon la revendication 1 ou 2,
**caractérisée en ce que** ledit au moins un émetteur d'ultrasons (33) et ledit au moins un récepteur d'ultrasons (35) sont susceptibles de fonctionner dans un mode de fonctionnement du type impulsion/écho et/ou un mode de fonctionnement Doppler.

4. Installation de surveillance à ultrasons selon la revendication 1, 2 ou 3,
**caractérisée en ce que** celle-ci commute ledit au moins un émetteur d'ultrasons (33) et ledit au moins un récepteur d'ultrasons (35) depuis un mode de fonctionnement de type impulsion/écho vers un mode de fonctionnement Doppler dès que l'objet (41) se trouve dans une région spatiale (25) prévue pour l'actionnement de l'élément d'équipement (29a, 29b).

5. Installation de surveillance à ultrasons selon l'une des revendications précédentes,
**caractérisée en ce que** ledit au moins un émetteur d'ultrasons (33) et ledit au moins un récepteur d'ultrasons (35) sont susceptibles d'être amenés à fonctionner dans un mode de fonctionnement du type impulsion/écho, en particulier pour déterminer la vitesse de déplacement et/ou la direction de déplacement de l'objet (41), avec une cadence de répétition d'impulsion fixe.

6. Installation de surveillance à ultrasons selon l'une des revendications 1 à 4,
**caractérisée en ce que** ledit au moins un émetteur d'ultrasons (33) et ledit au moins un récepteur d'ultrasons (35) sont susceptibles d'être amenés à fonctionner dans un mode de fonctionnement du type impulsion/écho, en particulier pour déterminer la vitesse de déplacement et/ou la direction de déplacement de l'objet (41), avec une cadence de répétition d'impulsion, ladite cadence de répétition d'impulsion étant réglable en fonction de la vitesse de déplacement de l'objet (41).

7. Installation de surveillance à ultrasons selon l'une des revendications précédentes,
**caractérisée en ce que** l'élément d'équipement (29a, 29b) est actionné uniquement si la position de l'objet (41) est située à l'intérieur d'une zone spatiale prédéterminée (65) et/ou si la vitesse de déplacement de l'objet (41) tombe à l'intérieur d'un intervalle de vitesse prédéterminé.

8. Installation de surveillance à ultrasons selon l'une des revendications précédentes,
**caractérisée en ce que** celle-ci est réalisée pour déterminer un geste en se rapportant à des positions et/ou des vitesses de déplacement et/ou des directions de déplacement, déterminées temporellement les unes après les autres, de l'objet (41).

9. Installation de surveillance à ultrasons selon la revendication 8,
**caractérisée en ce que** celle-ci est réalisée pour actionner l'élément d'équipement (29a, 29b) uniquement si le geste déterminé correspond à un geste associé à l'élément d'équipement (29a, 29b) pour son actionnement.

10. Installation de surveillance à ultrasons selon l'une des revendications précédentes,
**caractérisée en ce qu'**il est prévu plusieurs émetteurs d'ultrasons (33) et/ou plusieurs récepteurs d'ultrasons (35), qui peuvent être pilotés de manière séquentielle ou parallèle, en particulier dans le mode de service du type impulsion/écho, pour déterminer la position de l'objet (41).

11. Installation de surveillance à ultrasons selon l'une des revendications précédentes,
**caractérisée en ce que** l'élément d'équipement (29a, 29b) inclut un éclairage de l'habitacle du véhicule, qui est susceptible d'être actionné, et en particulier de manière variable, en fonction de la position, de la vitesse de déplacement et/ou de la direction de déplacement de l'objet (41).

12. Installation de surveillance à ultrasons selon l'une des revendications précédentes,
**caractérisée en ce que** celle-ci tient compte de la température, en particulier de l'habitacle, lors de la détermination de la position, de la vitesse de déplacement et/ou de la direction de déplacement de l'objet (41).

13. Installation de surveillance à ultrasons selon l'une des revendications précédentes,
**caractérisée en ce qu'**un objet posé sur un siège du véhicule est susceptible d'être détecté.

14. Installation de surveillance à ultrasons selon la revendication 13,
**caractérisée en ce qu'**après détection de l'objet un signal d'avertissement peut être déclenché et/ou des éléments d'équipement concernant la sécurité de circulation sont susceptibles d'être actionnés.

15. Installation de surveillance à ultrasons selon l'une des revendications précédentes,
**caractérisée en ce qu'**il est prévu un module de toiture (27), en particulier à intégrer dans un ciel de toiture (25) du véhicule, module dans lequel sont logés ledit au moins un émetteur d'ultrasons (33) et ledit au moins un récepteur d'ultrasons (35).
